(19) Europäisches Patentamt European Patent Office Office européen des brevets

(11) **EP 3 410 173 B1**

(12) **EUROPEAN PATENT SPECIFICATION**

(45) Date of publication and mention of the grant of the patent:
**06.11.2024 Bulletin 2024/45**

(21) Application number: **16887070.7**

(22) Date of filing: **28.01.2016**

(51) International Patent Classification (IPC):
*G02B 27/01* (2006.01)    *G02B 5/00* (2006.01)
*G02B 5/30* (2006.01)    *G02B 27/28* (2006.01)
*G02B 27/00* (2006.01)    *G02B 17/08* (2006.01)

(52) Cooperative Patent Classification (CPC):
**G02B 27/0172; G02B 5/003; G02B 5/3025;
G02B 17/086; G02B 27/0025; G02B 27/286;**
G02B 5/3083

(86) International application number:
**PCT/CN2016/072528**

(87) International publication number:
**WO 2017/128183 (03.08.2017 Gazette 2017/31)**

(54) **SHORT-DISTANCE OPTICAL AMPLIFICATION MODULE, AMPLIFICATION METHOD AND AMPLIFICATION SYSTEM**

OPTISCHES VERSTÄRKERMODUL MIT KURZER REICHWEITE, VERSTÄRKUNGSVERFAHREN UND VERSTÄRKUNGSSYSTEM

MODULE D'AMPLIFICATION OPTIQUE À COURTE DISTANCE, PROCÉDÉ D'AMPLIFICATION ET SYSTÈME D'AMPLIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.12.2018 Bulletin 2018/49**

(73) Proprietor: Shenzhen Dlodlo New Technology Co., Ltd.
**Shenzhen, Guangdong 518057 (CN)**

(72) Inventors:
- **LI, Gang**
  **Nanshan District,**
  **Shenzhen**
  **Guangdong 518000 (CN)**
- **TANG, Weiping**
  **Nanshan District,**
  **Shenzhen**
  **Guangdong 518000 (CN)**

(74) Representative: **Moser Götze & Partner Patentanwälte mbB**
**Paul-Klinger-Strasse 9**
**45127 Essen (DE)**

(56) References cited:
| | |
|---|---|
| EP-A1- 0 803 756 | EP-A1- 3 118 666 |
| EP-A2- 1 024 388 | EP-A2- 1 096 293 |
| WO-A1-01/02893 | CN-A- 105 093 555 |
| CN-A- 105 093 555 | CN-A- 105 629 472 |
| CN-U- 204 855 955 | CN-U- 204 855 955 |
| CN-U- 205 539 752 | US-A- 5 966 242 |
| US-A1- 2002 159 150 | US-A1- 2012 147 465 |
| US-A1- 2015 219 893 | |

- **ANONYMOUS: "Aspheric lens - Wikipedia", 23 November 2015 (2015-11-23), XP093162728, Retrieved from the Internet <URL:https://en.wikipedia.org/w/index.php?title=Aspheric_lens&oldid=691931549>**

## Description

### FIELD OF THE INVENTION

The present invention relates to optical apparatuses, and in particular, to a short-distance optical amplification module, an amplification method and an amplification system.

### BACKGROUND OF THE INVENTION

In the structure of an optical amplification module of the prior art, in order to meet the imaging quality requirement of the optical amplification module, the module generally includes a plurality of optical devices. Because each optical device requires a certain mounting space, the optical amplification module consisted of the plurality of optical devices often has a large size and a large volume, which in particular cannot meet the display requirements on small space and high amplification of an intelligent virtual reality (VR) wearable device.

US 20020159150 A1 discloses a collimating optical device utilizes a reflective beam splitter in the form of a linear polarizing beam splitter to achieve a wide field of view. One form of the wide-angle collimating optical device includes, in order from an image source, a first absorptive linear polarizer; a first quarter-wave plate; an optical doublet including a plano-concave singlet, a plano-convex singlet whose convex surface has the same curvature as the curvature of the concave surface, and a first reflective beam splitter joining the concave surface of the plano-concave singlet to the convex surface of the plano-convex singlet; a second quarter-wave plate; and a second reflective beam splitter. One of the reflective beam splitters is a linear polarizing beam splitter, most preferably a wire grid polarizer.

US 2012/0147465 A1 discloses a collimating image-forming apparatus comprising a first linear polarizer is disclosed. A first quarter wave plate is disposed adjacent the first polarizer and has its fast and slow axes at substantially 45° to the plane of polarization of the first polarizer. The apparatus further comprises a beam-splitting curved mirror having a convex surface adjacent the first polarizer and facing towards the first quarter-wave plate, a second quarter-wave plate adjacent the concave side of the curved mirror, the second quarter wave plate having its having its fast and slow axes oriented with respect to the corresponding axes of the first quarter-wave plate at angles substantially equal to a first integral multiple of 90°, and a reflective-transmissive polarizing member adjacent the second quarter-wave plate. A second linear polarizer is adjacent the reflective-transmissive polarizing member, the second linear polarize: having its plane of polarization oriented with respect to the plane of polarization of the first linear polarizer at an angle substantially equal to a second integral multiple of 90°, both of the multiples being even or both being odd.

EP 1 024 388 A2 discloses a compact, lightweight, multi-wavelength display system which can be used as a collimating eyepiece is provided. The system utilizes a polarization selective optical element, or PS element, that reflects one linear polarization state while transmitting radiation of the orthogonal linear polarization state. The PS element is used in combination with a quarter wave plate and an optical element, the optical element including a partially reflective surface. The optical element may either be a single element or an optical doublet. In the latter configuration, the partially reflective surface is at the interface between the two singlets that comprise the doublet. The system also includes an image source that either alone, or in combination with other optical elements, produces circularly polarized light of the desired rotary sense.

### SUMMARY OF THE INVENTION

Embodiments of the present invention provide a short-distance optical amplification module and an amplification method as set forth in the main claim 1 and 6, thereby solving the problem of large structural size of the existing optical amplification module.

The invention has the beneficial effects below:

In the short-distance optical amplification module according to the invention, by the first phase delay plate, the imaging lens, the second phase delay plate and the reflective type polarizing plate, an optical image can be amplified on the imaging lens after being reflected by the reflective type polarizing plate on the transmission path. Not only the optical image can meet the requirement of optical magnification, but also the second phase delay plate and the reflective type polarizing plate can be arranged to adhere to each other, thereby further reducing the size and volume of an optical module.

In the short-distance optical amplification module according to the invention, the second phase delay plate and the imaging lens are arranged to adhere to each other. The distance between the second phase delay plate and the reflective polarizing plate can be reduced without affecting the optical path, and the size and volume of the short-distance optical amplification module can be further reduced.

In the short-distance optical amplification module according to the invention, one side of the imaging lens is the second optical surface, so that the second optical surface can be adhered to the second phase delay plate, and the second phase delay plate is in turn adhered to the reflective polarizing plate, thus the size and volume of the short-distance optical amplification module can be further reduced. Additionally, one side of the imaging lens is arranged as the second optical surface, so that the degree of chromatic dispersion of a polarized light when the imaging lens is the first optical surface is diminished, thereby improving the definition of the optical image. In comparison with the first optical surface, the mirror finishing process and process difficulty of the second optical surface will be lower, and the manufacturing cost will be small.

In the short-distance optical amplification module according to the invention, an absorptive type polarizing plate is further added on the outer side of the reflective polarizing plate. The absorptive type polarizing plate can absorb the light from the outside and prevent a reflection image of the outside from being seen, thereby preventing the ambient light from interfering the optical image. Additionally, the absorptive type polarizing plate, the reflection polarizing plate and the second phase delay plate are arranged to adhere to each other, and the optical display screen and the first phase delay plate are arranged to adhere to each other, thus the volume and size of the optical amplification module may be further reduced, and assembly may be simplified.

In the short-distance optical amplification method according to the invention, an optical image is transmissively amplified via the imaging lens and then reflected on the reflective type polarizing plate. When the reflected optical image passes through the imaging lens again, it is amplified on the first optical surface for the second time, and the polarization direction is converted from an elliptical or circular polarization direction into a non-second linear polarization direction. Finally, it enters the human eyes via the reflective type polarizing plate. By twice reflection of the optical image in the optical amplification module, not only the visual angle can be enlarged, but also the size and volume of the optical amplification module can be reduced.

In a short-distance optical amplification system not according to the invention, the short-distance optical amplification module is a multilayer optical structure consisted of a first phase delay layer, an imaging lens layer, a second phase delay layer and a reflective type polarization layer. The size and volume of the optical amplification module are greatly reduced without affecting the optical imaging quality, the weight is reduced, and the comfortableness of wearing VR glasses employing the optical amplification component is improved.

**BRIEF DESCRIPTION OF THE DRAWINGS**

In order to more clearly illustrate the technical solutions of the embodiments of the invention or of the prior art, the drawings needed in the description of the embodiments or the prior art will be briefly introduced below. Apparently, the drawings in the description below are only some embodiments of the invention, and other drawings may also be obtained by one of ordinary skills in the art according to these drawings without creative work.

Fig. 1 is a structural representation of a short-distance optical amplification module according to an example, which does not fall under the scope of the claims;

Fig. 2 is a structural representation of another short-distance optical amplification module according to an example, which does not fall under the scope of the claims;

Fig. 3 is a schematic diagram showing the transmission of an optical image in a first optical surface and a second optical surface of an imaging lens respectively;

Fig. 4 is a structural representation of yet another short-distance optical amplification module according to an example, which does not fall under the scope of the claims;

Fig. 5 is a structural representation of still another short-distance optical amplification module according to an embodiment of the invention, wherein the display (1) and optical device (3) are not shown;

Fig. 6 is a flow chart of a short-distance optical amplification method according to an example, which does not fall under the scope of the claims;

Fig. 7 is a flow chart of another short-distance optical amplification method according to an embodiment of the invention;

Fig. 8 is a structural representation of a short-distance optical amplification system according to an embodiment of the invention, wherein the optical device (3) is not shown; and

Fig. 9 is a structural representation of another short-distance optical amplification system according to an embodiment of the invention.

**DETAILED DESCRIPTION OF THE EMBODIMENTS**

For one skilled in the art to better understand the technical solutions of the invention, the technical solutions in the embodiments of the invention will be described clearly and fully below in conjunction with the drawings in the examples, which do not fall under the scope of the claims, as well as the embodiments of the invention.

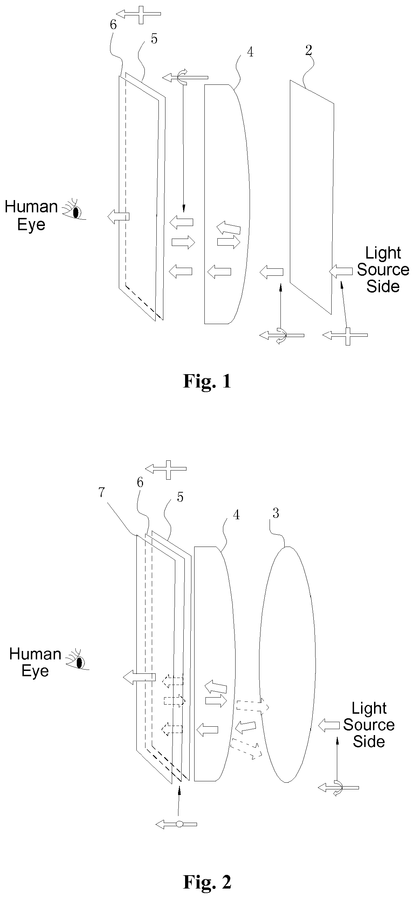

A short-distance optical amplification module, as shown in Fig. 1, includes a first phase delay plate 2, an imaging lens 4, a second phase delay plate 5 and a reflective type polarizing plate 6 that are successively arranged, wherein, the first phase delay plate 2 is arranged in a transmission path of an optical image having a first linear polarization direction and is configured for converting the polarization direction of the optical image from the first linear polarization direction to an elliptical or circular polarization direction. The optical image refers to the light or polarized light emitted from the light source side.

The imaging lens 2 is arranged in a transmission path of an optical image having an elliptical or circular polarization direction. The imaging lens 2 has a first optical surface adjacent to the first phase delay plate and a second optical surface opposite to the first optical surface, the first optical surface being a transflective optical surface, and the imaging lens is configured for amplifying an optical image passing through the first optical surface, said amplification is referred to as first-time amplification.

Wherein, in this example, the first optical surface is a curved surface, the second optical surface is a flat surface, and the center of curvature of the first optical surface and the second optical surface are located on the same side of the first optical surface.

The second phase delay plate 5 is arranged on one side of the second optical surface of the imaging lens 4 and is configured for converting the polarization direction of the optical image from the elliptical or circular polarization direction to a second linear polarization direction. Moreover, the second linear polarization direction is orthogonal to the first linear polarization direction.

The reflective type polarizing plate 6 is adhered to the second phase delay plate 5, and the reflective type polarizing plate 6 has a transmission direction consistent with the first linear polarization direction.

Wherein, the optical image successively passes through the first phase delay plate 2, the imaging lens 4, the second phase delay plate 5 and the reflective type polarizing plate 6. Moreover, the reflective type polarizing plate 6 is further configured for reflecting an optical image having a second linear polarization direction that is transmitted from the second phase delay plate 5, and the imaging lens 4 is configured for amplifying the optical image reflected by the reflective type polarizing plate 6, wherein said amplification is referred to as second-time amplification. The second phase delay plate 5 is further configured for converting the polarization direction of the second-time amplified optical image into a non-second linear polarization direction, thereby passing an optical image having the non-second linear polarization direction through the reflective type polarizing plate 6.

Wherein, the non-second linear polarization direction is preferably the first linear polarization direction.

The first phase delay plate 2, the second phase delay plate 5 and reflective polarizing plate 6 in this example all belong to the prior art. Each time an optical image passes through a phase delay plate, a certain degree of phase delay can be added. A reflective polarizing plate can transmit a linearly-polarized light with a polarization direction consistent with the transmission direction thereof, but totally reflect a linearly-polarized light with a polarization direction orthogonal to the transmission direction thereof, and partially transmit a circularly-polarized light or an elliptically-polarized light with a certain phase delay. In the two sides of the imaging lens 4, the side adjacent to the first phase delay plate 2 is the first optical surface, and the side adjacent to the second phase delay plate 5 is the second optical surface, wherein the first optical surface is a transflective optical surface, by which a certain ratio of light may be reflected, and the remaining ratio of light may be transmitted.

The operational principle of the short-distance optical amplification module according to this example will be introduced below.

On the side adjacent to the light source (the rightmost side in Fig. 1), after an optical image having a first linear polarization direction (in this example, the direction parallel to paper direction) passes through the first phase delay plate 2, the polarization direction of the optical image is changed to a phase-delayed elliptical polarization direction or circular polarization direction. Especially, when the first phase delay plate 2 is a 1/4 wave plate, the polarization direction of the optical image transmitted will be changed to a circular polarization direction after passing through the first phase delay plate 2, and then it will be transmitted when passing through the first optical surface of the imaging lens, so that the optical mage will be transmissively amplified. This amplification is a small amplification. The polarization direction of the optical image transmitted will be converted from the elliptical or circular polarization direction to a second linear polarization direction (in this example, vertical to the paper direction) after passing through the second phase delay plate 5. The second linear polarization direction is orthogonal to the first linear polarization direction. In this example, the direction of a polarized light rotated by the first phase delay plate 2 is consistent with that rotated by the second phase delay plate 5 (that is, the first phase delay plate 2 and the second phase delay plate 5 are both left-handed or right-handed phase delay plates).

After reaching the reflective type polarizing plate 6, the optical image having a second linear polarization direction will be totally reflected. After the reflected optical image passes through the second phase delay plate 5 again, the polarization direction will be converted from the first linear polarization direction to an elliptical or circular polarization direction. Especially, when the second phase delay plate 5 is a 1/4 wave plate, after passing through the second phase delay plate 5, the polarization direction of the reflected optical image will be changed to a circular polarization direction.

Light will be reflected and amplified with a certain ratio of energy when the optical image again passes through the first optical surface of the imaging lens 4 and is reflected, and this amplification is a large amplification. The optical image largely amplified passes through the second phase delay plate 5 again, and the polarization direction thereof is changed to a non-second linear polarization direction (preferably, the first linear polarization direction). Especially, when the first phase delay plate 2 is a 1/4 wave plate, the polarization direction of the optical image is changed to the first linear polarization direction after passing through the first phase delay plate 2 again. Because the reflective type polarizing plate 6 has a transmission direction consistent with the first linear polarization direction, the optical image having a first linear polarization direction will enter the sight of a viewer via the reflective polarizing plate 6, so that large amplification of light may be realized in a short distance (less than 5cm).

In the short-distance optical amplification module according to an embodiment of the invention, by the first phase delay plate, the imaging lens, the second phase delay plate and the reflective type polarizing plate, an optical image can be amplified on the imaging lens after being reflected by the reflective type polarizing plate on the transmission path. Not only the optical image can meet the requirement of optical magnification, but also the second phase delay plate and the reflective type polarizing plate can be arranged to adhere to each other, thereby further reducing the size and volume of an optical module.

In one preferred example, which does not fall under the scope of the claims, the non-second linear polarization direction is the first linear polarization direction, so that the polarization direction of the optical image is changed to the first linear polarization direction again after passing through the second phase delay plate so as to guarantee that the optical image is totally reflected when reaching the reflective type polarizing plate for the first time. That is, at this moment, the polarization direction of the optical image is changed to a second linear polarization direction that is orthogonal to the first linear polarization direction, and the optical path difference of the optical image after passing through the first phase delay plate 2 and the second phase delay plate 4 is

$$\frac{1}{2}, 1\frac{1}{2}, 2\frac{1}{2} \cdots \cdots n\frac{1}{2}$$

, wherein n is an integer.

Additionally, the second phase delay plate 5 and the reflective polarizing plate 6 can be arranged to adhere to each other, thus the transmission path of the polarized light in the second phase delay plate 5 and the reflective polarizing plate 6 can be reduced. The distance between the second phase delay plate and the reflective polarizing plate can be reduced without affecting the optical path, and hence the size and volume of the short-distance optical amplification module can be further reduced.

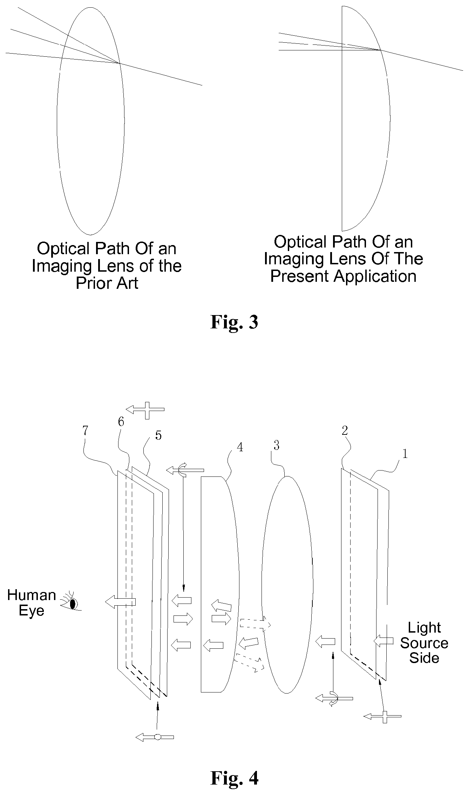

As shown in Fig. 2, in order to further reduce the size and volume of the optical amplification component, the second phase delay plate is adhered to the second optical surface of the imaging lens. The side of the imaging lens 4 (transflective curved lens 4) that is adjacent to the second phase delay plate 5 is provided as the second optical surface, and the flat surface can be adhered to the second phase delay plate 5. Generally, the mirror surface of the imaging lens 4 is a circular arc camber. In this example, which does not fall under the scope of the claims, the side of the imaging lens 4 adjacent to the second phase delay plate 5 is provided as a flat surface. On one hand, it may be realized that the second phase delay plate 5 and the imaging lens 4 are adhered to each other, the distance between the two optical components is further shortened, and the size of the optical amplification module is reduced. On the other hand, as shown in Fig. 3, if the two sides of the imaging lens 4 are both curved surfaces, a too large curved surface will cause chromatic dispersion to the light, and hence the visual imaging effect will be affected; or, if the curvature of the curved surface is small, the optical path will be reduced, and the amplification effect will be affected. Therefore, by providing one side of the imaging lens 4 according to this example as a flat surface, the degree of chromatic dispersion on the curved surface can be reduced, or the problem of small amplification on the optical path caused by a small curvature may be alleviated, thus the refraction or reflection of light in the optical module can be made more stable, and the imaging effect of the optical path will not be affected.

Additionally, for the production process, one side of the transflective curved lens according to this example is a flat surface, and in comparison with the existing imaging lens of which the two sides are both curved surfaces, the manufacture difficulty of a flat surface is lower than that of a curved surface, and correspondingly, the manufacturing cost is also reduced, and hence the production efficiency can be improved.

As shown in Fig. 2, the short-distance optical amplification module according to this solution further includes an absorptive type polarizing plate 7, wherein, the absorptive type polarizing plate 7 is arranged on one side of the reflective polarizing plate 6 that faces away from the imaging lens 4. Additionally, the absorptive type polarizing plate 7 may be adhered to the reflective polarizing plate 6, and the transmission direction of the absorptive type polarizing plate 7 is consistent with (parallel to) that of the absorptive type polarizing plate 7.

In the short-distance optical amplification module according to the invention, an absorptive type polarizing plate may be added on the outer side of the reflective polarizing plate, and the transmission direction of the absorptive type polarizing plate is arranged parallel to that of the reflection polarizing plate. That is, a polarized light emitted from the reflection polarizing plate may directly pass through the absorptive type polarizing plate. The ambient light is absorbed by the absorptive type polarizing plate. Therefore, a reflection image of the outside may be prevented from being seen, and the interference to display by the outside light is prevented. Additionally, by adhering the reflection polarizing plate and the second phase delay plate to each other, light loss may be lowered, the volume and size may be further reduced, and assembly may be simplified.

When the above short-distance optical amplification module according to the above example is applied to a VR device, for example, VR glasses:

As shown in Fig. 4, the short-distance optical amplification module further includes an optical display screen 1. The optical display screen 1 is arranged on one side of the first phase delay plate 2 that faces away from the transflective curved lens 4 and is configured for generating an optical image having a first linear polarization direction. Moreover, the optical display screen is adhered to the first phase delay plate 2.

For the short-distance optical amplification module in this example, which does not fall under the scope of the claims, because the optical display screen 1 is adhered to the first phase delay plate 2 and the second phase delay plate 5 is adhered to the reflective polarizing plate 6, two sets of distances are reduced respectively. When a part of the components in the optical module are adhered to each other without affecting the transmission of the optical path, the size of the optical module can be greatly reduced. When the short-distance optical amplification module is applied to VR glasses, the size and thickness of the VR glasses can be reduced, and the volume can be decreased, thus it may approach the size of ordinary glasses, and the comfortableness of a user wearing the VR glasses may be improved.

The first optical surface of the above imaging lens 4 is a transflective optical surface, that is, a 50% transmissive and 50% reflective optical surface. The optical display screen 1 may be a minitype high-resolution display screen. In the case that a minitype high-resolution display screen is selected, a display effect of large visual field and high resolution may be realized with a small volume.

In the short-distance optical amplification module according to this example, the second phase delay plate 5, the reflective polarizing plate 6 and the absorptive type polarizing plate are arranged to adhere to each other successively, and the optical display screen 1 and the first phase delay plate 2 are also arranged to adhere to each other. As a result, in comparison with a short-distance optical amplification module before adherence, the size and volume of a short-distance optical amplification module after adherence may be greatly reduced. Additionally, the absorptive type polarizing plate added can absorb the light from the outside and prevent a reflection image of the outside from being seen, thereby preventing the interference of the ambient light on the display.

Additionally, in the optical amplification module, an optical device 3 that will not affect the phase delay of the light may be added as required between any adjacent two of the optical display screen 1, the first phase delay plate 2, the imaging lens 4, the second phase delay plate 5 and the reflective polarizing plate 6. Preferably, as shown in Fig. 4, an optical module 3 for correcting hue change may be added between the first phase delay plate 2 and the imaging lens 4 to strengthen the utility of the short-distance optical amplification module.

In order to make human eyes see an image at the axial center of the reflective polarizing plate 6, the optical display screen 1, the first phase delay plate 2, the imaging lens 4, the second phase delay plate 5, the reflective polarizing plate 6 and the absorptive type polarizing plate 7 are arranged coaxially.

The axial side of the short-distance optical amplification module may be wrapped with a light-absorbing material, which can absorb the light that is not finally transmitted through the reflective polarizing plate and enters the human eyes and can prevent such light from affecting the final display result.

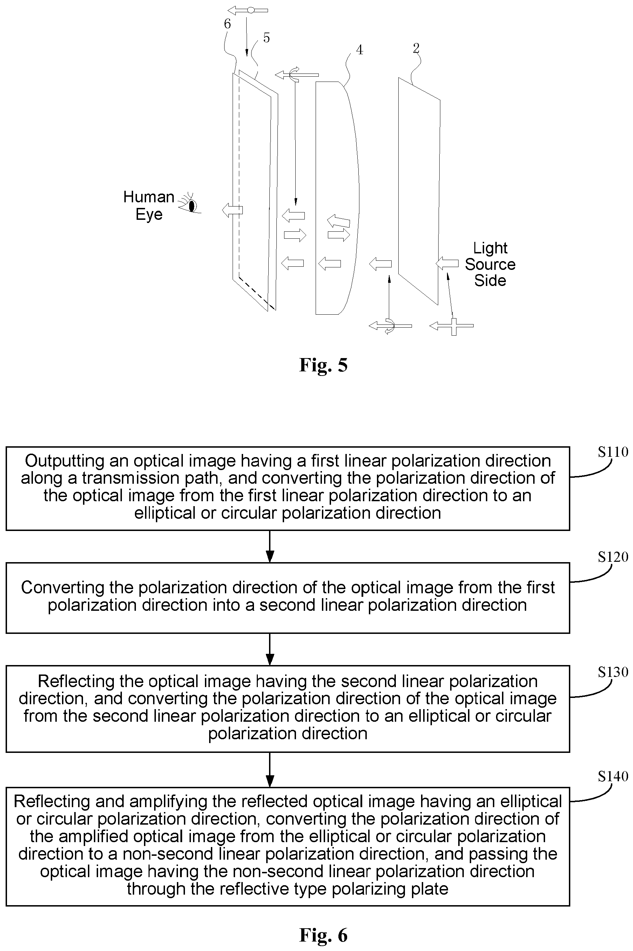

Referring to Fig. 5, in comparison with the above examples, this embodiment differs in that: in this embodiment, the direction of a polarized light rotated by the first phase delay plate 2 is opposite to that rotated by the second phase delay plate 5; that is, if the first phase delay plate 2 has a left-handed rotation direction, the second phase delay plate 5 will have a right-handed rotation direction; or, if the first phase delay plate 2 has a right-handed rotation direction, the second phase delay plate 5 will have a left-handed rotation direction. Correspondingly, in this embodiment, the reflective type polarizing plate 5 has a transmission direction orthogonal to the first linear polarization direction; the second phase delay plate 2 is arranged on one side of the second optical surface of the imaging lens 4 and configured for converting the polarization direction of the optical image from the elliptical or circular polarization direction to the first linear polarization direction.

The optical image successively passes through the first phase delay plate 2, the imaging lens 4, the second phase delay plate 5 and the reflective type polarizing plate 6. Moreover, the reflective type polarizing plate 6 is further configured for reflecting the optical image having a first linear polarization direction that is transmitted from the second phase delay plate 5, and the imaging lens 4 is configured for amplifying the optical image reflected by the reflective type polarizing plate 6, said amplification is referred to as second-time amplification. The second phase delay plate 5 is further configured for converting the polarization direction of the second-time amplified optical image into a non-first linear polarization direction, thereby passing the optical image having the non-first linear polarization direction through the reflective type polarizing plate 6.

The non-first linear polarization direction is preferably a direction orthogonal to the first linear polarization direction.

As shown in Fig. 6, corresponding to the above short-distance optical amplification module, the disclosure further provides a short-distance optical amplification method, which does not fall under the scope of the claims, and the method includes the following steps

Step S110: an optical image having a first linear polarization direction is output along a transmission path, the polarization direction of the optical image is converted from the first linear polarization direction to an elliptical or circular polarization direction, and the optical image is transmissively amplified via an imaging lens.

Step S120: the polarization direction of the optical image is converted from the elliptical or circular polarization direction to a second linear polarization direction, the second linear polarization direction being orthogonal to the first linear polarization direction.

Step S130: the optical image having the second linear polarization direction is reflected by a reflective type polarizing plate, and the polarization direction of the optical image is converted from the second linear polarization direction to an elliptical or circular polarization direction, wherein, the reflective type polarizing plate has a transmission direction consistent with the first linear polarization direction.

Step S140: the reflected optical image having an elliptical or circular polarization direction is reflectively amplified via the imaging lens, the polarization direction of the amplified optical image is converted from the elliptical or circular polarization direction to a non-second linear polarization direction, and the optical image having the non-second linear polarization direction is passed through the reflective type polarizing plate.

In the short-distance optical amplification method according to the example, based on the amplification principle of the above short-distance optical amplification module, very large amplification is combined in a small overall optical channel by making full use of the large angle (relative to the small angle variation of transmission) adjustment feature of a reflective optical module, thus a large visual angle effect can be realized for a minitype screen. Considering the low sensitivity on the overall brightness loss in near eye optics, a mode of discarding a part of the energy of an imaging lens is employed in the overall optical design in the disclosure, without apparently affecting the final display effect. Therefore, a near eye display optical module with high amplification, small overall thickness and almost no phase difference is realized.

In the short-distance optical amplification method according to the example, an optical image is transmissively amplified via the imaging lens and then reflected on the reflective type polarizing plate. When the reflected optical image passes through the imaging lens again, it is amplified on the first optical surface for the second time, and the polarization direction is converted from an elliptical or circular polarization direction into a non-second linear polarization direction, and finally, it enters the human eyes via the reflective type polarizing plate. By twice reflection of the optical image in the optical amplification module, not only the visual angle can be enlarged, but also the size and volume of the optical amplification module can be reduced.

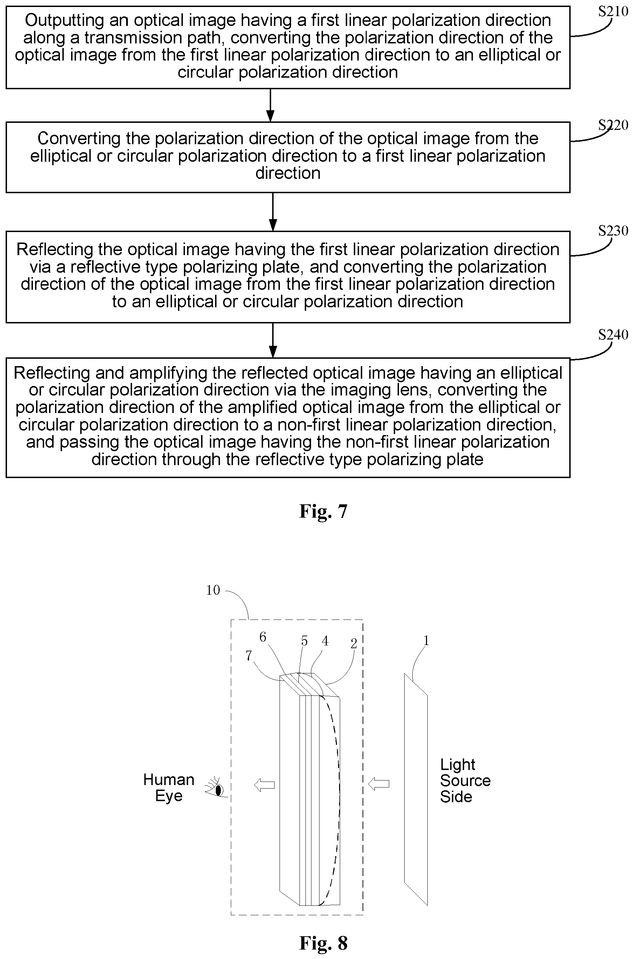

As shown in Fig. 7, the invention further provides a short-distance optical amplification method, and the method includes the following steps.

Step S210: an optical image having a first linear polarization direction is output along a transmission path, the polarization direction of the optical image is converted from the first linear polarization direction to an elliptical or circular polarization direction, and the optical image is transmissively amplified via an imaging lens.

Step S220: the polarization direction of the optical image is converted from the elliptical or circular polarization direction to a first linear polarization direction.

Step S230: the optical image having the first linear polarization direction is reflected via a reflective type polarizing plate, and the polarization direction of the optical image is converted from the first linear polarization direction to an elliptical or circular polarization direction, wherein, the reflective type polarizing plate has a transmission direction orthogonal to the first linear polarization direction.

Step S240: the reflected optical image having an elliptical or circular polarization direction is reflectively amplified via the imaging lens, the polarization direction of the amplified optical image is converted from the elliptical or circular polarization direction to a non-first linear polarization direction, and the optical image having the non-first linear polarization direction is passed through the reflective type polarizing plate.

The invention further provides a short-distance optical amplification system. As shown in Fig. 8, the system includes an optical display screen 1 configured for generating an optical image having a first linear polarization direction, and a short-distance optical amplification module 10, wherein, the short-distance optical amplification module 10 includes: a first phase delay layer 2, an imaging lens layer 4, a second phase delay layer 5 and a reflective type polarization layer 6, wherein:

the first phase delay layer 2 is arranged in a transmission path of an optical image having a first linear polarization direction and is configured for converting the polarization direction of the optical image from the first linear polarization direction to an elliptical or circular polarization direction;

the imaging lens layer 4 is arranged in a transmission path of an optical image having an elliptical or circular polarization direction and has a first optical surface adjacent to the first phase delay plate 2 and a second optical surface opposite to the first optical surface, the first optical surface being a transflective optical surface, and the imaging lens 4 is configured for amplifying an optical image passing through the first optical surface;

the second phase delay layer 5 is arranged on one side of the second optical surface of the imaging lens 4 and is configured for converting the polarization direction of the optical image from the elliptical or circular polarization direction to a second linear polarization direction, wherein the second linear polarization direction is orthogonal to the first linear polarization direction;

the reflective type polarization layer 6 is adhered to the second phase delay layer 5, and the reflective type polarization layer 6 has a transmission direction consistent with the first linear polarization direction.

The optical display screen 1 is arranged on one side of the first phase delay layer 2 that is adjacent to the short-distance optical amplification module 10.

The optical image successively passes through the first phase delay layer, the imaging lens layer, the second phase delay layer and the reflective type polarization layer. The reflective type polarization layer is configured for reflecting an optical image having a second linear polarization direction that is transmitted from the second phase delay layer. The imaging lens layer is configured for reflecting and again amplifying the optical image reflected by the reflective type polarization layer. The second phase delay layer is further configured for converting the polarization direction of the amplified optical image into a non-second linear polarization direction, thereby passing an optical image having the non-second linear polarization direction through the reflective type polarizing plate.

The structural positions and functions of the first phase delay layer, the imaging lens layer, the second phase delay layer and the reflective type polarization layer in the short-distance optical amplification system according to this embodiment are respectively the same as the structural positions and functions of the first phase delay layer, the imaging lens layer, the second phase delay layer and the reflective type polarization layer in the above embodiment, and the transmission process of the optical image in the short-distance optical amplification module 10 is also the same as that in the above short-distance optical amplification module. The difference lies in that: in this embodiment, the short-distance optical amplification module is a multilayer optical structure consisted of a first phase delay layer, an imaging lens layer, a second phase delay layer and a reflective type polarization layer, and the size and volume of the optical amplification module are greatly reduced without affecting the optical imaging quality, the weight is reduced, and the comfortableness of wearing VR glasses employing the optical amplification component is improved.

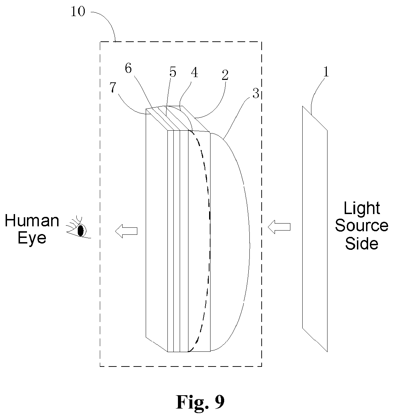

Additionally, as shown in Fig. 8 or 9, the short-distance optical amplification module 10 in the optical amplification system further includes an absorptive type polarization layer 7, wherein, the absorptive type polarization layer 7 is arranged on one side that is adjacent to the reflective polarization layer 6 and faces away from the second phase delay layer 5, and the absorptive type polarization layer can absorb the light from the outside and prevent a reflection image of the outside from being seen, thereby preventing the interference of the ambient light on the display.

According to the claimed invention, the system further includes an optical device 3 that will not affect the phase delay, wherein, the optical device 3 is arranged between any two of the optical display screen, the first phase delay layer, the imaging lens layer, the second phase delay layer and the reflective polarization layer.

As shown in Fig. 9, the optical device 3 that will not affect the phase delay is arranged between the first phase delay layer 2 and the optical display screen 1 and is integrated with the short-distance optical amplification module 10. The optical device includes a near-sighted lens, a far-sighted lens or , in an example, which does not fall under the scope of the claims, an astigmatic lens thereby improving the applicability of the short-distance optical amplification module.

In the above embodiment, the two sides of the optical display screen 1 are both flat surfaces. In order to reduce the size and volume of the module, the first phase delay plate 2 is adhered to the optical display screen 1. Moreover, the first phase delay plate and the second phase delay plate are both 1/4 wave plates.

It should be noted that, relational terms such as "first" and "second" employed herein are only used for distinguishing one entity or operation from another entity or operation, rather than requiring or implying that these entities or operations have such a practical relation or sequence.

## Claims

1. A short-distance optical amplification system, comprising: an optical display screen (1), a first phase delay plate (2), a convex imaging lens (4), a second phase delay plate (5) and a reflective type polarizing plate (6) that are successively arranged, wherein:

   the first phase delay plate (2) is arranged in a transmission path of an optical image having a first linear polarization direction and is configured for converting the polarization direction of the optical image from the first linear polarization direction to an elliptical or circular polarization direction;
   the convex imaging lens (4) is arranged in a transmission path of an optical image having an elliptical or circular polarization direction, and the convex imaging lens (4) has a first optical surface and a second optical surface opposite to the first optical surface, the first optical surface is a transflective optical surface, wherein the first optical surface is a curved surface, the second optical surface is a flat surface, and the center of curvature of the first optical surface and the second optical surface are located on the same side of the first optical surface, and the convex imaging lens (4) is configured for transmissively amplifying an optical image passing through the first optical surface for the first time;
   the second phase delay plate (5) is arranged on one side of the second optical surface of the convex imaging lens and is configured for converting the polarization direction of the optical image from the elliptical or circular polarization direction to the first linear polarization direction;
   the reflective type polarizing plate (6) is adhered to the second phase delay plate, and the reflective type polarizing plate (6) has a transmission direction orthogonal to the first linear polarization direction;
   wherein the direction of a polarized light rotated by the first phase delay plate (2) is opposite to that rotated by the second phase delay plate (5);
   wherein the optical image successively passes through the first phase delay plate (2), the convex imaging lens (4), the second phase delay plate (5) to reach the reflective type polarizing plate (6), an optical image having a first linear polarization direction that is transmitted from the second phase delay plate (5) is reflected by the reflective type polarizing plate, passes through the second phase delay plate to reach the first optical surface of the convex imaging lens (4), the first optical surface of the convex imaging lens (4) reflectively amplifies the optical image reflected by the reflective type polarizing plate (6) for a second time, the image thus reflected successively passes through the convex imaging lens (4), the second phase delay plate (5) to reach the reflective type polarizing plate (6), and the second phase delay plate (5) further converts the polarization direction of the optical image that has been reflectively amplified for the second time into a non-first linear polarization direction, thereby passing the optical image having the non-first linear polarization direction through the reflective type polarizing plate (6), wherein the second reflective amplification is larger than the transmissive amplificatior **characterized in that**: the first optical surface is adjacent to the first phase delay plate;

wherein the short-distance optical amplification system further comprises an optical device that will not affect a phase delay arranged between any two of the optical display screen, the first phase delay plate (2), the convex imaging lens (4), the second phase delay plate (5) and the reflective type polarizing plate (6), wherein the optical device comprises a near-sighted lens or a far-sighted lens.

2. The system according to claim 1, wherein, the non-first linear polarization direction is orthogonal to the first linear polarization direction.

3. The system according to claim 1, wherein, the second phase delay plate (5) is adhered to the second optical surface of the convex imaging lens (4).

4. The system according to claim 2, further comprising: an absorptive type polarizing plate (7); the absorptive type polarizing plate is adhered to one side of the reflective type polarizing plate (6) that faces away from the convex imaging lens (4), and the absorptive type polarizing plate (7) has a transmission direction consistent with the reflective type polarizing plate (6).

5. The system according to any one of claims 1 to 4, wherein the optical display screen (1) is configured for generating an optical image having the first linear polarization direction and is adhered to the first phase delay plate (2).

6. A short-distance optical amplification method, comprising the steps of:

outputting (S210) an optical image having a first linear polarization direction through an optical display screen (1) along a transmission path, converting the polarization direction of the optical image from the first linear polarization direction to an elliptical or circular polarization direction via a first phase delay plate, and transmitting and transmissively amplifying the optical image for a first time via a convex imaging lens (4), wherein the convex imaging lens (4) has a first optical surface and a second optical surface opposite to the first optical surface, the first optical surface is a transflective optical surface, wherein the first optical surface is a curved surface, the second optical surface is a flat surface, and the center of curvature of the first optical surface and the second optical surface are located on the same side of the first optical surface;
converting (S220) the polarization direction of the optical image from the elliptical or circular polarization direction to a first linear polarization direction via a second phase delay plate (5), wherein the direction of a polarized light rotated by the first phase delay plate (2) is opposite to that rotated by the second phase delay plate (5), wherein the second phase delay plate is arranged on the side of the second optical surface of the convex imaging lens;
reflecting (S230) the optical image having the first linear polarization direction via a reflective type polarizing plate (6) that has a transmission direction orthogonal to the first linear polarization direction, the optical image thus reflected passes through the second phase delay plate to reach the first optical surface of the convex imaging lens, wherein the second phase delay plate converts the polarization direction of the optical image from the first linear polarization direction to an elliptical or circular polarization direction; and
reflectively amplifying (S240) for a second time the reflected optical image having an elliptical or circular polarization direction via the first optical surface of the convex imaging lens (4), the image thus reflected successively passing through the convex imaging lens, the second phase delay plate to reach the reflective type polarizing plate;
converting the polarization direction of the reflectively amplified optical image for the second time from the elliptical or circular polarization direction to a non-first linear polarization direction via the second phase delay plate, and passing the optical image having the non-first linear polarization direction through the reflective type polarizing plate (6),
wherein the second reflective amplification is larger than the first transmissive amplification **characterized in that**: the first optical surface is adjacent to the first phase delay plate; wherein an optical device that will not affect a phase delay is further provided in the transmission path, wherein the optical device is arranged between any two of the optical display screen, the first phase delay plate (2), the convex imaging lens (4), the second phase delay plate (5) and the reflective polarizing plate (6), and comprises a near-sighted lens or a far-sighted lens.

**Patentansprüche**

1. Optisches Kurzstreckenverstärkungssystem, umfassend: einen optischen Anzeigebildschirm (1), eine erste Phasenverzögerungsplatte (2), eine konvexe Abbildungslinse (4), eine zweite Phasenverzögerungsplatte (5) und eine Polarisationsplatte (6) vom Reflexionstyp, die nacheinander eingerichtet sind, wobei:

   die erste Phasenverzögerungsplatte (2) in einem Übertragungsweg eines optischen Bilds mit einer ersten linearen Polarisationsrichtung eingerichtet ist und zum Umwandeln der Polarisationsrichtung des optischen Bilds von der ersten linearen Polarisationsrichtung in eine elliptische oder zirkulare Polarisationsrichtung konfiguriert ist;
   die konvexe Abbildungslinse (4) in einem Übertragungsweg eines optischen Bilds mit einer elliptischen oder zirkularen Polarisationsrichtung eingerichtet ist und die konvexe Abbildungslinse (4) eine erste optische Fläche und eine zweite optische Fläche, die entgegengesetzt zu der ersten optischen Fläche ist, aufweist, wobei die erste optische Fläche eine transflektive optische Fläche ist, wobei die erste optische Fläche eine gekrümmte Fläche ist, die zweite optische Fläche eine flache Fläche ist und die Mitte der Krümmung der ersten optischen Fläche und die zweite optische Fläche auf derselben Seite der ersten optischen Fläche angeordnet sind, und die konvexe Abbildungslinse (4) zum übertragenden Verstärken eines optischen Bilds, das durch die erste optische Fläche hindurchtritt, zum ersten Mal konfiguriert ist;
   die zweite Phasenverzögerungsplatte (5) auf einer Seite der zweiten optischen Fläche der konvexen Abbildungslinse eingerichtet ist und zum Umwandeln der Polarisationsrichtung des optischen Bilds von der elliptischen oder zirkularen Polarisationsrichtung in die erste lineare Polarisationsrichtung konfiguriert ist;

   die Polarisationsplatte (6) vom Reflexionstyp an der zweiten Phasenverzögerungsplatte angehaftet ist und die Polarisationsplatte (6) vom Reflexionstyp eine Übertragungsrichtung aufweist, die orthogonal zu der ersten linearen Polarisationsrichtung ist;
   wobei die Richtung eines polarisierten Lichts, das von der ersten Phasenverzögerungsplatte (2) gedreht wird, entgegengesetzt zu dem ist, das von der zweiten Phasenverzögerungsplatte (5) gedreht wird;
   wobei das optische Bild nacheinander durch die erste Phasenverzögerungsplatte (2), die konvexe Abbildungslinse (4), die zweite Phasenverzögerungsplatte (5) hindurchtritt, um die Polarisationsplatte (6) vom Reflexionstyp zu erreichen, wobei ein optisches Bild mit einer ersten linearen Polarisationsrichtung, das von der zweiten Phasenverzögerungsplatte (5) übertragen wird, von der Polarisationsplatte vom Reflexionstyp reflektiert wird, durch die zweite Phasenverzögerungsplatte hindurchtritt, um die erste optische Fläche der konvexen Abbildungslinse (4) zu erreichen, wobei die erste optische Fläche der konvexen Abbildungslinse (4) das optische Bild, das von der Polarisationsplatte (6) vom Reflexionstyp reflektiert wird, zum zweiten Mal reflektierend verstärkt, wobei das so reflektierte Bild nacheinander durch die konvexe Abbildungslinse (4), die zweite Phasenverzögerungsplatte (5) hindurchtritt, um die Polarisationsplatte (6) vom Reflexionstyp zu erreichen, und die zweite Phasenverzögerungsplatte (5) weiterhin die Polarisationsrichtung des optischen Bilds, das zum zweiten Mal reflektierend verstärkt wurde, in eine nicht-erste lineare Polarisationsrichtung umwandelt, wodurch das optische Bild mit der nicht-ersten linearen Polarisationsrichtung durch die Polarisationsplatte (6) vom Reflexionstyp hindurchtritt,
   wobei die zweite reflektierende Verstärkung größer als die erste übertragende Verstärkung ist, **dadurch gekennzeichnet, dass**:

   die erste optische Fläche angrenzend zu der ersten Phasenverzögerungsplatte ist;
   wobei das optische Kurzstreckenverstärkungssystem weiterhin eine optische Vorrichtung umfasst, die eine Phasenverzögerung nicht beeinflussen wird, eingerichtet zwischen beliebigen zwei von dem optischen Anzeigebildschirm, der ersten Phasenverzögerungsplatte (2), der konvexen Abbildungslinse (4), der zweiten Phasenverzögerungsplatte (5) und der Polarisationsplatte (6) vom Reflexionstyp, wobei die optische Vorrichtung eine Kurzsichtlinse oder eine Weitsichtlinse umfasst.

**2.** System nach Anspruch 1, wobei die nicht-erste lineare Polarisationsrichtung orthogonal zu der ersten linearen Polarisationsrichtung ist.

**3.** System nach Anspruch 1, wobei die zweite Phasenverzögerungsplatte (5) an der zweiten optischen Fläche der konvexen Abbildungslinse (4) angehaftet ist.

**4.** System nach Anspruch 2, weiterhin umfassend: eine Polarisationsplatte (7) vom Absorptionstyp; wobei die Polarisationsplatte vom Absorptionstyp an einer Seite der Polarisationsplatte (6) vom Reflexionstyp angehaftet ist, die von der konvexen Abbildungslinse (4) weg weist, und die Polarisationsplatte (7) vom Absorptionstyp eine Übertragungsrichtung aufweist, die mit der Polarisationsplatte (6) vom Reflexionstyp übereinstimmt.

**5.** System nach einem der Ansprüche 1 bis 4, wobei der optische Anzeigebildschirm (1) zum Erzeugen eines optischen Bilds mit der ersten linearen Polarisationsrichtung konfiguriert ist und an der ersten Phasenverzögerungsplatte (2) angehaftet ist.

**6.** Optisches Kurzstreckenverstärkungsverfahren, umfassend die Schritte:

Ausgeben (S210) eines optischen Bilds mit einer ersten linearen Polarisationsrichtung durch einen optischen Anzeigebildschirm (1) entlang einem Übertragungsweg, Umwandeln der Polarisationsrichtung des optischen Bilds von der ersten linearen Polarisationsrichtung in eine elliptische oder zirkulare Polarisationsrichtung mittels einer ersten Phasenverzögerungsplatte und Übertragen und übertragendes Verstärken des optischen Bilds zum ersten Mal mittels einer konvexen Abbildungslinse (4), wobei die konvexe Abbildungslinse (4) eine erste optische Fläche und eine zweite optische Fläche, die entgegengesetzt zu der ersten optischen Fläche ist, aufweist, wobei die erste optische Fläche eine transflektive optische Fläche ist, wobei die erste optische Fläche eine gekrümmte Fläche ist, die zweite optische Fläche eine flache Fläche ist und die Mitte der Krümmung der ersten optischen Fläche und die zweite optische Fläche auf derselben Seite der ersten optischen Fläche angeordnet sind; Umwandeln (S220) der Polarisationsrichtung des optischen Bilds von der elliptischen oder zirkularen Polarisationsrichtung in eine erste lineare Polarisationsrichtung mittels einer zweiten Phasenverzögerungsplatte (5), wobei die Richtung eines polarisierten Lichts, das von der ersten Phasenverzögerungsplatte (2) gedreht wird, entgegengesetzt zu dem ist, das von der zweiten Phasenverzögerungsplatte (5) gedreht wird, wobei die zweite Phasenverzögerungsplatte auf der Seite der zweiten optischen Fläche der konvexen Abbildungslinse eingerichtet ist; Reflektieren (S230) des optischen Bilds mit der ersten linearen Polarisationsrichtung mittels einer Polarisationsplatte (6) vom Reflexionstyp, die eine Übertragungsrichtung aufweist, die orthogonal zu der ersten linearen Polarisationsrichtung ist, wobei das so reflektierte optische Bild durch die zweite Phasenverzögerungsplatte hindurchtritt, um die erste optische Fläche der konvexen Abbildungslinse zu erreichen, wobei die zweite Phasenverzögerungsplatte die Polarisationsrichtung des optischen Bilds von der ersten linearen Polarisationsrichtung in eine elliptische oder zirkulare Polarisationsrichtung umwandelt; und reflektierendes Verstärken (S240) des reflektierten optischen Bilds mit einer elliptischen oder zirkularen Polarisationsrichtung zum zweiten Mal mittels der ersten optischen Fläche der konvexen Abbildungslinse (4), wobei das so reflektierte Bild nacheinander durch die konvexe Abbildungslinse, die zweite Phasenverzögerungsplatte hindurchtritt, um die Polarisationsplatte vom Reflexionstyp zu erreichen; Umwandeln der Polarisationsrichtung des zum zweiten Mal reflektierend verstärkten optischen Bilds von der elliptischen oder zirkularen Polarisationsrichtung in eine nicht-erste lineare Polarisationsrichtung mittels der zweiten Phasenverzögerungsplatte und Hindurchführen des optischen Bilds mit der nicht-ersten linearen Polarisationsrichtung durch die Polarisationsplatte (6) vom Reflexionstyp, wobei die zweite reflektierende Verstärkung größer als die erste übertragende Verstärkung ist, **dadurch gekennzeichnet, dass**:

die erste optische Fläche angrenzend zu der ersten Phasenverzögerungsplatte ist; wobei eine optische Vorrichtung, die eine Phasenverzögerung nicht beeinflussen wird, weiterhin in dem Übertragungsweg vorgesehen ist, wobei die optische Vorrichtung zwischen beliebigen zwei von dem optischen Anzeigebildschirm, der ersten Phasenverzögerungsplatte (2), der konvexen Abbildungslinse (4), der zweiten Phasenverzögerungsplatte (5) und der Polarisationsplatte (6) vom Reflexionstyp eingerichtet ist und eine Kurzsichtlinse oder eine Weitsichtlinse umfasst.

## Revendications

**1.** Système d'amplification optique à courte distance comprenant: un écran d'affichage optique (1), une première plaque de retard de phase (2), une lentille d'imagerie convexe (4), une seconde plaque de retard de phase (5) et une plaque de polarisation par réflexion (6) qui se succèdent, système dans lequel

la première plaque de retard de phase (2) est placée dans le chemin de transmission de l'image optique en ayant une première polarisation rectiligne et elle est configurée pour convertir la polarisation rectiligne de l'image optique de sa première polarisation rectiligne à une polarisation rectiligne elliptique ou circulaire,

la lentille d'imagerie convexe (4) est mise dans le chemin de transmission de l'image optique ayant une polarisation rectiligne elliptique ou circulaire et cette lentille d'imagerie convexe (4) a une première surface optique et une seconde surface optique opposée à la première surface optique, la première surface optique étant une surface optique transflextive, la première surface optique est une surface courbe, la seconde surface optique est une surface plane et le centre de courbure de la première surface optique et celui de la seconde surface optique sont situés sur le même côté de la première surface optique, et la lentille d'imagerie convexe (4) est configurée pour amplifier par transmission, l'image optique traversant la première fois la première surface optique,

la seconde plaque de retard de phase (5) est sur un côté de la seconde surface optique de la lentille d'imagerie convexe et elle est configurée pour convertir la polarisation rectiligne de l'image optique pour passer de la polarisation rectiligne elliptique ou circulaire à la première polarisation rectiligne,

la plaque de polarisation par réflexion (6) est collée à la seconde plaque de retard de phase et la plaque de polarisation par réflexion (6) a une direction de transmission orthogonale à la première polarisation rectiligne,

système d'amplification optique dans lequel la direction de la lumière polarisée, tournée par rapport à la première plaque de retard de phase (2) est opposée celle tournée par la seconde plaque de retard de phase (5),

l'image optique passe successivement à travers la première plaque de retard de phase (2), la lentille d'imagerie convexe (4), la seconde plaque de retard de phase (5) pour atteindre la plaque de polarisation par réflexion (6), l'image optique ayant une première polarisation rectiligne transmise de la seconde plaque de retard de phase (5) ayant une première polarisation rectiligne qui est transmise de la seconde plaque de retard de phase (5) pour être réfléchie par la plaque de polarisation par réflexion, pour passer à travers la seconde plaque de retard de phase et atteindre la première surface optique de la lentille d'imagerie convexe (4), la première surface optique de la lentille d'imagerie convexe (4) amplifiant une seconde fois, par réflexion l'image optique réfléchie par la plaque de polarisation par réflexion (6), l'image ainsi réfléchie passant successivement à travers la lentille d'imagerie convexe (4), la seconde plaque de retard de phase (5) pour atteindre la plaque de polarisation par réflexion (6) et la seconde plaque de retard de phase (5) qui convertit en outre la polarisation rectiligne de l'image optique qui a été amplifiée par réflexion pour la seconde fois, en une première polarisation rectiligne, l'image optique ayant une polarisation rectiligne autre que la première polarisation passant à travers la plaque de polarisation par réflexion (6),

la seconde amplification par réflexion étant plus grande que la première transmission par réflexion, système **caractérisé en ce que**

la première surface optique est adjacente à la première plaque de retard de phase,

le système d'amplification optique à courte distance comprenant en outre un dispositif optique qui n'influence pas le retard de phase entre n'importe lequel des deux éléments parmi : l'écran d'affichage optique, la première plaque de retard de phase (2), la lentille d'imagerie convexe (4), la seconde plaque de retard de phase (5) et la plaque de polarisation par réflexion (6), le dispositif optique ayant une lentille à signature courte ou une lentille à signature longue.

2. Système selon la revendication 1, dans lequel la polarisation rectiligne autre que la première polarisation est orthogonale à la première polarisation rectiligne.

3. Système selon la revendication 1, dans lequel la seconde plaque de retard de phase (5) est collée à la seconde surface optique de la lentille d'imagerie convexe (4).

4. Système selon la revendication 2, comprenant en outre une plaque de polarisation par absorption (7), cette plaque de polarisation par absorption étant collée au côté de la plaque de polarisation par réflexion (6) qui n'est pas face à la lentille d'imagerie convexe (4) et la plaque de polarisation par absorption (7) a une direction de transmission correspondant à la plaque de polarisation par réflexion (6).

5. Système selon l'une quelconque des revendications 1 à 4, dans lequel l'écran d'affichage optique (1) est configuré pour générer une image optique ayant une première polarisation rectiligne et il est collé à la première plaque de retard de phase (2).

**6.** Procédé d'amplification optique à courte distance comprenant les étapes consistant à:

fournir en sortie (S210) une image optique ayant une première polarisation rectiligne à travers un écran d'affichage optique (1) selon un chemin de transmission, convertir la polarisation rectiligne de l'image optique de sa première polarisation rectiligne à une polarisation rectiligne elliptique ou circulaire par une première plaque de retard de phase et transmettre et amplifier par transmission, cette lentille d'imagerie convexe (4) a une première surface optique et une seconde surface optique opposée à la première surface optique, la première surface optique étant une surface optique transflective,

la première surface optique est une surface courbe, la seconde surface optique est une surface plane et le centre de courbure de la première surface optique et celui de la seconde surface optique sont situés sur le même côté de la surface optique,

convertir (S220) la polarisation rectiligne de l'image optique de la polarisation rectiligne elliptique ou circulaire en une première polarisation rectiligne par une seconde plaque de retard de phase (5), la lumière polarisée, tournée par la première plaque de retard de phase (2) étant opposée à celle tournée par la seconde plaque de retard de phase (5), la seconde plaque de retard de phase étant sur le côté de la seconde surface optique de la lentille d'imagerie convexe,

réfléchir (S230) l'image optique ayant la première polarisation rectiligne par une plaque de polarisation par réflexion (6) et qui a une transmission orthogonale à la première polarisation rectiligne, l'image optique ainsi réfléchie traversant la seconde plaque de retard de phase pour atteindre la première surface optique de la lentille d'imagerie convexe, la seconde plaque de retard de phase convertissant la polarisation rectiligne de l'image optique de la première polarisation rectiligne en une polarisation rectiligne elliptique ou circulaire, et

amplifier par réflexion (S240) une seconde fois l'image optique réfléchie ayant une polarisation rectiligne elliptique ou circulaire par la première surface optique de la lentille d'imagerie convexe (4), l'image ainsi réfléchie traversant successivement la lentille d'imagerie convexe, la seconde plaque de retard de phase pour atteindre la plaque de polarisation par réflexion,

convertir la polarisation rectiligne de l'image optique amplifiée par réflexion, une seconde fois, pour passer de la polarisation elliptique ou circulaire à une polarisation rectiligne linéaire autre que la première par la seconde plaque de retard de phase et faire passer l'image optique ayant une polarisation rectiligne autre que la première polarisation rectiligne à travers la plaque de polarisation par réflexion (6),

la seconde amplification par réflexion étant plus grande que la première amplification par réflexion, procédé **caractérisé en ce que**

la première surface optique est adjacente à la première plaque de retard de phase,

le chemin de transmission ayant en outre un dispositif optique n'influençant pas le retard de phase, le dispositif optique est placé entre n'importe lequel des deux éléments suivants: écran d'affichage optique, première plaque de retard de phase (2), lentille d'imagerie convexe (4), seconde plaque de retard de phase (5) et plaque de polarisation par réflexion (6) et il comprend une lentille à signature courte et une lentille à signature longue.

**Fig. 1**

**Fig. 2**

Optical Path Of an Imaging Lens of the Prior Art

Optical Path Of an Imaging Lens Of The Present Application

**Fig. 3**

Human Eye

Light Source Side

**Fig. 4**

**Fig. 5**

| Outputting an optical image having a first linear polarization direction along a transmission path, and converting the polarization direction of the optical image from the first linear polarization direction to an elliptical or circular polarization direction | S110 |

| Converting the polarization direction of the optical image from the first polarization direction into a second linear polarization direction | S120 |

| Reflecting the optical image having the second linear polarization direction, and converting the polarization direction of the optical image from the second linear polarization direction to an elliptical or circular polarization direction | S130 |

| Reflecting and amplifying the reflected optical image having an elliptical or circular polarization direction, converting the polarization direction of the amplified optical image from the elliptical or circular polarization direction to a non-second linear polarization direction, and passing the optical image having the non-second linear polarization direction through the reflective type polarizing plate | S140 |

**Fig. 6**

Outputting an optical image having a first linear polarization direction along a transmission path, converting the polarization direction of the optical image from the first linear polarization direction to an elliptical or circular polarization direction — S210

Converting the polarization direction of the optical image from the elliptical or circular polarization direction to a first linear polarization direction — S220

Reflecting the optical image having the first linear polarization direction via a reflective type polarizing plate, and converting the polarization direction of the optical image from the first linear polarization direction to an elliptical or circular polarization direction — S230

Reflecting and amplifying the reflected optical image having an elliptical or circular polarization direction via the imaging lens, converting the polarization direction of the amplified optical image from the elliptical or circular polarization direction to a non-first linear polarization direction, and passing the optical image having the non-first linear polarization direction through the reflective type polarizing plate — S240

**Fig. 7**

10

6  5  4  2  1
7

Human Eye ← ←

Light Source Side

**Fig. 8**

**Fig. 9**

**EP 3 410 173 B1**

**Patent documents cited in the description**

- US 20020159150 A1
- US 20120147465 A1
- EP 1024388 A2